# EUROPEAN PATENT APPLICATION

(11) **EP 3 434 111 A1**
(43) Date of publication of application: **30.01.2019**
(21) Application number: 17770219.8
(22) Date of filing: 21.03.2017
(51) Int. Cl.: A23F 3/06, A23F 3/16

(54) **TEA LEAF POWDER**

(30) Priority: 22.03.2016 JP 2016057062
(71) Applicant: Nippon Paper Industries Co., Ltd., Tokyo 114-0002 (JP)
(72) Inventor: WASAI, Masafumi, Tokyo 114-0002 (JP); URATA, Nobuaki, Tokyo 114-0002 (JP); FUJII, Yuji, Tokyo 114-0002 (JP)
(74) Representative: Müller-Boré & Partner Patentanwälte PartG mbB
(86) International application number: PCT/JP2017/011242
(87) International publication number: WO 2017/164177

(57) **Abstract**

An object of the present invention is to provide tea leaf powder from which the liquid extracted has a favorable liquid color. That is, the present invention provides a tea leaf powder having 300 µm or more of 50% particle diameter measured by a laser diffraction type particle size distribution measuring apparatus on volume basis, and 0.05% by weight or more of anthocyanin content. The tea leaf powder preferably has 120 µm or more of 10% particle diameter measured by a laser diffraction type particle size distribution measuring apparatus on volume basis.

## Description

### TECHNICAL FIELD

The present invention relates to a tea leaf powder.

### BACKGROUND ART

Patent Literature 1 describes that the addition of powdered Houji-cha (powdered roasted green tea) having an average particle diameter equal to or less than a predetermined size to a tea beverage can enhance aroma, brothy taste, and rich flavor of the tea beverage and can maintain the liquid color of the tea beverage stored even under thermal conditions.

### PRIOR ART LITERATURE

### Patent Literature

Patent Literature 1: Japanese Patent No. 5525150

### SUMMARY OF INVENTION

### PROBLEM TO BE SOLVED BY THE INVENTION

Tea varieties include ones having a high content of anthocyanin. For example, *Camellia sinensis (L.) Kuntze sp Sunrouge* (hereinafter, also referred to as *Sunrouge*) has been known as a red tea variety containing anthocyanin. Tea leaves having a high content of anthocyanin such as *Sunrouge* tea leaf shows red liquid color when a tea beverage is prepared therefrom. This color appeals to the vision of consumers to make them feel like taking the beverage and make the beverage look tastier.

On the other hand, when a tea beverage is produced from tea leaf powder obtained by pulverizing the tea leaf of a tea variety having a high content of anthocyanin, the liquid color of the tea beverage is unstable and may be light color or may be insufficient in redness.

Patent Literature 1 describes the change in the liquid color when the tea beverage is stored under thermal conditions, however, does not describe that a tea beverage having a favorable liquid color is obtained from a tea leaf.

An object of the present invention is to provide tea leaf powder in which a liquid extracted from the tea leaf powder has a favorable liquid color.

### Solution to Problem

The inventors of the present invention have found that the particle diameter of the tea leaf powder is important to cause a liquid extracted from the tea leaf powder to have a favorable liquid color, and have accomplished the present invention.

The present invention provides the following [1] to [15].
[1] A tea leaf powder having 300 µm or more of 50% particle diameter measured by a laser diffraction type particle size distribution measuring apparatus on volume basis, and 0.05% by weight or more of anthocyanin content.
[2] The tea leaf powder according to [1], wherein the tea leaf powder has 10.0 to 50.0 of L* value based on the CIE1976 color space, -5.00 to 5.00 of a* value based on the CIE1976 color space, and 0 to 20.0 of b* value based on the CIE1976 color space.
[3] The tea leaf powder according to [1] or [2], wherein the tea leaf powder is a tea leaf powder of *Camellia sinensis (L.) Kuntze sp Sunrouge.*
[4] The tea leaf powder according to any one of [1] to [3], wherein the tea leaf powder has 120 µm or more of 10% particle diameter measured by a laser diffraction type particle size distribution measuring apparatus on volume basis.
[5] The tea leaf powder according to any one of [1] to [4], wherein the tea leaf powder has 500 µm or more of 90% particle diameter measured by a laser diffraction type particle size distribution measuring apparatus on volume basis.
[6] The tea leaf powder according to any one of [1] to [5], wherein the L* value based on the CIE1976 color space of an extracted liquid extracted under conditions where 2 g of the tea leaf powder is immersed in 100 ml of water of 95°C and is allowed to stand for 10 minutes is 72.0 or less.
[7] The tea leaf powder according to any one of [1] to [6], wherein the a* value based on the CIE1976 color space of an extracted liquid extracted under conditions where 2 g of the tea leaf powder is immersed in 100 ml of water of 95°C and is allowed to stand for 10 minutes is 44.7 or more.
[8] The tea leaf powder according to any one of [1] to [7], wherein the b* value based on the CIE1976 color space of an extracted liquid extracted under conditions where 2 g of the tea leaf powder is immersed in 100 ml of water of 95°C and is allowed to stand for 10 minutes is -45.0 or more.
[9] The tea leaf powder according to any one of [1] to [8], wherein the tea leaf powder is used for a tea bag.
[10] A tea bag comprising the tea leaf powder according to any one of [1] to [9].
[11] A method of producing a tea leaf powder having 0.05% by weight or more of anthocyanin content, the method comprising:
   Step (1): pulverizing a tea leaf having 0.05% by weight or more of anthocyanin content to obtain a pulverized tea leaf product; and
   Step (2): selecting a pulverized tea leaf product having 300 µm or more of 50% particle diameter measured by a laser diffraction type particle size distribution measuring apparatus on volume basis, out of the pulverized tea leaf product to be provided as a tea leaf powder.
[12] The method of producing a tea leaf powder according to [11], wherein Step (2) further comprises selecting a pulverized tea leaf product having 72.0 or less of L* value based on the CIE1976 color space of an extracted liquid extracted under conditions where 2 g of the pulverized tea leaf product is immersed in 100 ml of water of 95°C and is allowed to stand for 10 minutes, out of the pulverized tea leaf product to be provided as a tea leaf powder.
[13] The method of producing a tea leaf powder according to [11] or [12], further comprising:
   Step (3): packing the tea leaf powder to provide a tea bag.
[14] A method of producing a liquid extracted from tea leaf comprising:
   extracting the tea leaf powder according to any one of [1] to [9], the tea bag according to [10], or the tea leaf powder produced by the method according to any one of [11] to [13] with water.
[15] A method of selecting a tea leaf powder usable for an extracted liquid of a tea leaf having a favorable liquid color, the method comprising:
   Step (1): pulverizing a tea leaf having 0.05% by weight or more of anthocyanin content to obtain a pulverized tea leaf product; and
   Step (2): selecting a pulverized tea leaf product having 300 µm or more of 50% particle diameter measured by a laser diffraction type particle size distribution measuring apparatus on volume basis, out of the pulverized tea leaf product.

### EFFECT OF THE INVENTION

The present invention can provide a tea leaf powder in which the liquid extracted from the tea leaf powder has a favorable liquid color.

### EMBODIMENT FOR CARRYING OUT THE INVENTION

### <1. Tea leaf powder of the present invention>

The present invention provides a tea leaf powder having 300 µm or more of 50% particle diameter measured by a laser diffraction type particle size distribution measuring apparatus on volume basis, and 0.05% by weight or more of anthocyanin content.

Examples of the tea leaf powder having 0.05% by weight or more of anthocyanin content include tea leaf powders of a hybrid of *Camellia sinensis* and *Camellia taliensis,* an improved variety thereof, and a closely related variety thereof. Examples of the hybrid of *Camellia sinensis* and *Camellia taliensis* include *Sunrouge* (Ministry of Agriculture, Forestry and Fisheries of Japan, Variety Registration No. 21262, scientific name *Camellia sinensis (L.) Kuntze sp Sunrouge*) and Cha Chuukanbohon Nou 6 (tea intermediate parental plant No. 6) (F95181).

The tea leaf powder of the present invention is preferably a tea leaf powder of the hybrid of *Camellia sinensis* and *Camellia taliensis* and more preferably a tea leaf powder of *Camellia sinensis (L.) Kuntze sp Sunrouge* or Cha Chuukanbohon Nou 6, and further preferably a tea leaf powder of *Camellia sinensis (L.) Kuntze sp Sunrouge.*

The upper limit of the anthocyanin content of the tea leaf powder of the present invention is not particularly limited and is usually 1.0% by weight or less.

The anthocyanin contents of the tea leaf of the *Sunrouge* and the tea leaf of Cha Chuukanbohon Nou 6 can be measured by high performance liquid chromatography analysis. It is described in, for example, Japan Agricultural Research Quarterly 46 (4), 321-328 (2012), "'*Sunrouge*'*,* a New Tea Cultivar with High Anthocyanin" that the anthocyanin contents of the tea leaf of *Sunrouge* and the tea leaf of Cha Chuukanbohon Nou 6 are 0.05% by weight or more.

The leaf herein may include not only a leaf blade but also a petiole and a stem.

The tea leaf herein refers to a product produced by providing a picked fresh leaf with treatment including drying. The tea leaf may be a product produced through heating (for example, heating by steaming and roasting in iron pot), twisting and rolling treatment, and/or fermentation treatment. Therefore, the tea leaf herein is a product usually produced by carrying out at least one treatment of heating, extraction, and drying (for example, freeze-drying and spray-drying) with respect to a fresh leaf. In addition to the above products, the tea leaf may be a product produced by carrying out drying or other treatment, without carrying out heating, with respect to the fresh leaf.

The season for picking the leaf is not limited. The tea leaf may be any of fresh tea, last year's tea, tea picked in spring, first-picked tea, second-picked tea, third-picked tea, fourth-picked tea, and tea picked in autumn.

A Method of growing the leaf is not limited. The leaf may be a leaf grown by shielding natural light by reed screens or may be grown under natural light without shielding natural light.

Examples of the tea leaf types include green tea, black tea, and oolong tea. Examples of the tea leaf of green tea include Sen-cha (middle grade green tea), Hiki-cha (ground green tea), Fukamushi-sen-cha (deep steamed and dried green tea), Gyokuro (high-grade green tea), Kabuse-cha (green tea lightly screened from sunlight), Ban-cha (coarse green tea), Tamaryoku-cha (green tea leaf having a shape of comma-shaped jewel), Kamairi-cha (green tea roasted in an iron pot), Kona-cha (green tea formed of the powder produced during production), Me-cha (coarse broken green tea leaf and buds generated during production), Kuki-cha (green tea of twigs), Houji-cha (roasted green tea), and Funmatsu-cha (finely ground green tea).

As the tea leaf or a pulverized tea leaf product to be the raw material of the tea leaf powder of the present invention, the L* value based on the CIE1976 color space is preferably 10.0 to 50.0, more preferably 30.0 to 40.0, and further preferably 34.5 to 38.0. The a* value based on the CIE1976 color space is preferably -5.00 to 5.00, more preferably -3.00 to 0, and further preferably - 1.80 to -1.00. The b* value based on the CIE1976 color space is preferably 0 to 20.0, more preferably 2.00 to 10.0, and further preferably 5.00 to 7.20.

As the tea leaf powder of the present invention, the L* value based on the CIE1976 color space is preferably 10.0 to 50.0, more preferably 30.0 to 40.0, and further preferably 34.5 to 38.0. The a* value based on the CIE1976 color space is preferably -5.00 to 5.00, more preferably - 3.00 to 0, and further preferably -1.80 to -1.00. The b* value based on the CIE1976 color space is preferably 0 to 20.0, more preferably 2.00 to 10.0, and further preferably 5.00 to 7.20.

Usually, the color coordinates of a tea leaf powder based on the CIE1976 color space are not changed depending on the particle diameter of the tea leaf. Therefore, the color coordinates of the tea leaf or the pulverized tea leaf product based on the CIE1976 color space may usually be determined to be the color coordinates of the tea leaf powder based on the CIE1976 color space.

The tea leaf powder of the present invention has 300 µm or more of 50% particle diameter measured by a laser diffraction type particle size distribution measuring apparatus on volume basis.

In this specification, the 50% particle diameter means a 50% particle diameter measured by a laser diffraction type particle size distribution measuring apparatus on volume basis.

The tea leaf powder having a 50% particle diameter of 300 µm or more allows the liquid color of the liquid extracted from the tea leaf powder (hereinafter, the "liquid extracted from the tea leaf powder" also refers to "liquid extracted from tea leaf") to be favorable.

The tea leaf powder having a 50% particle diameter of less than 300 µm may not allow the liquid color of the liquid extracted from tea leaf to be stably favorable. It is assumed that the reason why the favorable liquid color is difficult to be stably obtained is that the tea leaf powder having less than 300 µm of 50% particle diameter may have insufficient flowability in water and thus coloring matter is difficult to be uniformly extracted from the tea leaf powder.

The 50% particle diameter of the tea leaf powder of the present invention is preferably 320 µm or more, more preferably 340 µm or more, and further preferably 360 µm or more, 380 µm or more, 400 µm or more, 420 µm or more, 440 µm or more, 460 µm or more, 480 µm or more, 500 µm or more, 600 µm or more, 700 µm or more, 800 µm or more, 1000 µm or more, 1100 µm or more, or 1200 µm or more.

The 50% particle diameter of the tea leaf powder of the present invention is preferably 3500 µm or less, more preferably 2000 µm or less, and further preferably 1300 µm or less.

The tea leaf powder of the present invention is preferably a tea leaf powder having 100% of sieve passing weight percentage through a sieve having 8.0 mm of sieve opening, more preferably a tea leaf powder having 100% of sieve passing weight percentage through a sieve having 2.8 mm of sieve opening, and further preferably a tea leaf powder having 100% of sieve passing weight percentage through a sieve having 1.0 mm of sieve opening. By using such a tea leaf powder, the caroling matter can be effectively extracted from the tea leaf powder.

The 10% particle diameter of the tea leaf powder of the present invention is preferably 120 µm or more, more preferably 140 µm or more, and further preferably 160 µm or more, 180 µm or more, 200 µm or more, 220 µm or more, 240 µm or more, 260 µm or more, 280 µm or more, 300 µm or more, 320 µm or more, 340 µm or more, 360 µm or more, 380 µm or more, 400 µm or more, 500 µm or more, or 600 µm or more.

In this specification, the 10% particle diameter means a 10% particle diameter measured by a laser diffraction type particle size distribution measuring apparatus on volume basis.

The 90% particle diameter of the tea leaf powder of the present invention is preferably 500 µm or more, more preferably 600 µm or more, and further preferably 700 µm or more, 800 µm or more, 900 µm or more, 1000 µm or more, 1200 µm or more, 1400 µm or more, 1600 µm or more, 1800 µm or more, or 2000 µm or more.

In this specification, the 90% particle diameter means a 90% particle diameter measured by a laser diffraction type particle size distribution measuring apparatus on volume basis.

The tea leaf powder of the present invention has a favorable liquid color of the liquid extracted from tea leaf. The favorable liquid color can be evaluated by, for example, strength of the liquid color and/or redness of the liquid color. The liquid color can be determined to be favorable when the strength of the liquid color is high and/or the redness of the liquid color is high. The favorable liquid color can be evaluated by, for example, measuring the L* value, a* value, and b* value based on the CIE1976 color space of the liquid extracted from tea leaf, carrying out sensory evaluation, and the like.

The high strength of the liquid color of the liquid extracted from the tea leaf can be evaluated by, for example, indicating that the liquid color has a lower L* value. For example, when the L* value is 72.0 or less, liquid extracted from the tea leaf is determined to have high strength of the liquid color. The redness of the liquid color of the liquid extracted from tea leaf can be evaluated by, for example, indicating whether the liquid color has a higher a* value. For example, when the a* value is 44.7 or more, the liquid extracted from the tea leaf is determined to have stronger redness of the liquid color.

The L* value, a* value, and b* value based on the CIE1976 color space can be measured by known methods. Examples of a measuring apparatus include a color and whiteness meter and a spectrophotometer.

For the tea leaf powder of the present invention, the L* value based on the CIE1976 color space of the extracted liquid extracted under the conditions where 2 g of the tea leaf powder is immersed in 100 ml of water of 95°C and is allowed to stand for 10 minutes is preferably 72.0 or less, more preferably 71.0 or less, further preferably 70.0 or less, 69.0 or less, 68.0 or less, 66.0 or less, 64.0 or less, 62.0 or less, 60.0 or less, 55.0 or less, or 50.0 or less. The lower limit of the L* value based on the CIE1976 color space of the extracted liquid extracted under the conditions where 2 g of the tea leaf powder is immersed in 100 ml of water of 95°C and is allowed to stand for 10 minutes is not particularly limited and is usually 30.0 or more. The water for extraction is preferably distilled water.

For the tea leaf powder of the present invention, the a* value based on the CIE1976 color space of the extracted liquid extracted under the conditions where 2 g of the tea leaf powder is immersed in 100 ml of water of 95°C and is allowed to stand for 10 minutes is preferably 44.7 or more, more preferably 45.0 or more, further preferably 46.0 or more, 47.0 or more, 48.0 or more, 49.0 or more, 50.0 or more, 51.0 or more, or 52.0 or more. The upper limit of the a* value based on the CIE1976 color space of the extracted liquid extracted under the conditions where 2 g of the tea leaf powder is immersed in 100 ml of water of 95°C and is allowed to stand for 10 minutes, is not particularly limited and is usually 90 or less. The water for extraction is preferably distilled water.

Therefore, for the tea leaf powder of the present invention, the values based on the CIE1976 color space of the extracted liquid extracted under the conditions where 2 g of the tea leaf powder is immersed in 100 ml of water of 95°C and is allowed to stand for 10 minutes are preferably an L* value of 72.0 or less and an a* value of 44.7 or more, more preferably an L* value of 68.0 or less and an a* value of 45.0 or more, and further preferably an L* value of 55.0 or less and an a* value of 47.0 or more. The water for extraction is preferably distilled water.

For the tea leaf powder of the present invention, the b* value based on the CIE1976 color space of the extracted liquid extracted under the conditions where 2 g of the tea leaf powder is immersed in 100 ml of water of 95°C and is allowed to stand for 10 minutes is preferably - 45.0 or more, more preferably -44.0 or more, further preferably -43.0 or more, -42.0 or more, -41.0 or more, - 40.0 or more, -38.0 or more, -35.0 or more, -30.0 or more, -27.0 or more, or -26.0 or more. The upper limit of the b* value based on the CIE1976 color space of the extracted liquid extracted under the conditions where 2 g of the tea leaf powder is immersed in 100 ml of water of 95°C and is allowed to stand for 10 minutes is not particularly limited and is usually 20.0 or less. The water for extraction is preferably distilled water.

The tea leaf powder of the present invention can be used not only under conditions where 2 g of the tea leaf powder is immersed in 100 ml of water of 95°C and is allowed to stand for 10 minutes but also under any desired extraction conditions.

Methods for producing the tea leaf powder of the present invention are not particularly limited. Examples of the methods include a method for pulverizing the tea leaf having 0.05% by weight or more of anthocyanin content of with a pulverizer (for example, a stone mill, a ball mill, a pin mill, a high-speed rotating mill, a rod mill, a jet mill, a roller mill, and other media mills). The tea leaf treated with the pulverizer may be dried tea leaf. Alternatively, undried tea leaf may be treated with a drying pulverizer. The 50% particle diameter can be controlled by changing operation conditions of the pulverizer (for example, rotation speed of a mill and pulverization time) and can be also controlled by classifying the tea leaf or the pulverized tea leaf product by known methods. The classification can be carried out using a classifier such as a cyclone separator or a sieving machine.

The operation conditions of the pulverizer may be adequately controlled depending on the size of the pulverizer, the amount of the tea leaf to be pulverized, and the like, and are not limited. The rotation speed of the pulverizer is, for example, 1 rpm to 10000 rpm, 100 rpm to 5000 rpm, or 500 rpm to 3000 rpm.

The pulverization time is, for example, 5 seconds to 3600 seconds, 10 seconds to 600 seconds, and 15 seconds to 60 seconds.

Examples of the method for producing the tea leaf powder of the present invention include a method for sieving the tea leaf or the pulverized product of the tea leaf having 0.05% by weight or more of anthocyanin content with a sieve having a sieve opening of 300 µm or more to provide the powder on the sieve.

The tea leaf powder of the present invention may be produced using two or more sieves having sieve openings of 300 µm or more and having different sieve openings therefrom. For example, the powder obtained by sieving tea leaf or the pulverized product of the tea leaf with a sieve having a sieve opening of 300 µm and collecting the powder on the sieve is further sieved with a sieve having a sieve opening of more than 300 µm. The powder on the sieve may be used or the powder under the sieve may be used.

The tea leaf powder of the present invention can be used in any extraction conditions to obtain the liquid extracted from tea leaf. For example, an extraction medium is poured into a pot containing a tea leaf and the tea leaf are filtered with a tea strainer to obtain the liquid extracted from tea leaf. At this time, the liquid extracted from tea leaf may be obtained by filtering all tea leaves in the pot or the liquid extracted from tea leaf may be obtained by filtering a partial amount of the tea leaf in the pot. The liquid extracted from tea leaf can be also obtained by packing the tea leaf in a tea bag, thereafter pouring an extraction medium in a pot containing the tea bag, and removing the tea bag. Furthermore, the tea leaf powder of the present invention can provide a tea beverage containing the liquid extracted from tea leaf.

The extraction medium is not particularly limited, however, is preferably a medium containing water and more preferably water and may be, for example, various types of water (for example, tap water, groundwater, distilled water, and ion exchanged water). When the extraction medium is a medium containing water, other components (for example, a pH adjuster and acidifier such as citric acid) may be added in addition to water and/or other extraction media (for example, ethanol) may be added in addition to water.

The pH of the extraction medium is not particularly limited. For example, the extraction medium may have 3 or more of pH, 4 or more of pH, 5 or more of pH, or 6 or more of pH. The pH of the extraction medium may be 10 or less of pH, 9 or less of pH, or 8 or less of pH.

When the extraction medium is water, water hardness is not particularly limited, however, the extraction medium may be, for example, soft water, medium hard water, and hard water.

The extraction temperature is not particularly limited, however, may be, for example, 0°C or more, 40°C or more, 50°C or more, 60°C or more, 70°C or more, 80°C or more, or 90°C or more. The extraction temperature may be, for example, 100°C or less, 98°C or less, 95°C or less, 90°C or less, 80°C or less, 70°C or less, 60°C or less, or 50°C or less.

The extraction time is not particularly limited, however, may be, for example, 10 seconds or more, 30 seconds or more, 1 minute or more, 3 minutes or more, 5 minutes or more, 10 minutes or more, 15 minutes or more, 1 hour or more, 12 hours or more, or 24 hours or more. The extraction time may be, for example, 48 hours or less, 24 hours or less, 12 hours or less, 1 hour or less, 15 minutes or less, 10 minutes or less, or 5 minutes or less.

The weight of the tea leaf powder of the present invention relative to 100 mL of the extraction medium is not particularly limited, however, may be, for example, 0.1 g/100 mL or more, 0.5 g/100 mL or more, 1.0 g/100 mL or more, 2 g/100 mL or more, 5 g/100 mL or more, or 10 g/100 mL or more.

The weight of the tea leaf powder of the present invention relative to 100 mL of the extraction medium may be, for example, 20 g/100 mL or less, 10 g/100 mL or less, 5.0 g/100 mL or less, 2.0 g/100 mL or less, or 1.0 g/100 mL or less.

During the extraction, the extracted liquid may be stirred or may be allowed to stand without stirring. After the extraction, the solid content may be removed (solid-liquid separation) by treatment such as filtration, centrifugal separation, and sieving.

When the centrifugal separation is carried out after the extraction, the conditions of the centrifugal separation are not particularly limited and may be, for example, 1000 G or more, 2000 G or more, or 3000 G or more. The time for centrifugal separation may be 1 minute or more, 5 minutes or more, or 10 minutes or more.

The tea leaf powder of the present invention is packed to be suitably used as a tea bag.

The package material is not particularly limited. Examples of the package material include paper, cloth, or nonwoven cloth produced from natural fiber, semi-synthetic fiber, or synthetic fiber.

The shape of the tea bag is not particularly limited. Examples of the shape of the tea bag include an envelope shape, a tetrahedron shape, and a quadrangular pyramid shape.

The tea leaf powder of the present invention may be used in combination with other components.

The other components are not particularly limited as long as the components do not impair the effect of the present invention. Examples of the components include a tea leaf other than the tea leaf having 0.05% by weight or more of anthocyanin content, other raw materials for beverage (for example, unpolished rice, hibiscus petals, various fruits, buckwheat tea, barley tea, and herbal tea), foods indicating acidity (for example, vinegar, lemon, foods made of Japanese plum as a raw material (for example, Japanese plum extract and pickled Japanese plum), carbonated beverages, alcoholic beverages, and lactic acid beverages), sweeteners, acidifiers, preservatives, seasonings, pH adjusting agents, antioxidants, and aroma chemicals.

The tea leaf powder of the present invention contains abundant anthocyanin and thus the extracted liquid shows stronger redness providing a favorable liquid color by using the tea leaf powder in combination with the foods indicating acidity and/or the acidifiers. For example, the extracted liquid indicates stronger redness providing a favorable liquid color by adjusting the pH of the extracted liquid to 5.5 or less, preferably 5.0 or less or 4.0 or less with citric acid.

The L* value based on the CIE1976 color space, when the pH of the extracted liquid extracted under the conditions where 2 g of the tea leaf powder is immersed in 100 ml of water of 95°C and is allowed to stand for 10 minutes is adjusted to 5.5 or less with the foods indicating acidity and/or the acidifiers, is preferably 60.0 or less or 59.0 or less, more preferably 50.0 or less, and further preferably 45.0 or less. The lower limit of the L* value based on the CIE1976 color space of the extracted liquid extracted under the conditions where 2 g of the tea leaf powder is immersed in 100 ml of water of 95°C and is allowed to stand for 10 minutes is not particularly limited and is usually 30.0 or more. The water for extraction is preferably distilled water.

For the tea leaf powder of the present invention, the a* value based on the CIE1976 color space when the pH of the extracted liquid extracted under the conditions where 2 g of the tea leaf powder is immersed in 100 ml of water of 95°C and is allowed to stand for 10 minutes is adjusted to 5.5 or less with the foods indicating acidity and/or the acidifiers is preferably 79.0 or more or 79.5 or more, more preferably 82.0 or more, and further preferably 83.0 or more. The upper limit of the a* value based on the CIE1976 color space of the extracted liquid extracted under the conditions where 2 g of the tea leaf powder is immersed in 100 ml of water of 95° and is allowed to stand for 10 minutes is not particularly limited and is usually 90 or less. The water for extraction is preferably distilled water.

Therefore, for the tea leaf powder of the present invention, the values based on the CIE1976 color space when the pH of the extracted liquid extracted under the conditions where 2 g of the tea leaf powder is immersed in 100 ml of water of 95°C and is allowed to stand for 10 minutes is adjusted to 5.5 or less with the foods indicating acidity and/or the acidifiers are preferably 60.0 or less or 59.0 or less of L* value and 79.0 or more or 79.5 or more of a* value, more preferably 50.0 or less of L* value and 82.0 or more of a* value, and further preferably 45.0 or less of L* value and 83.0 or more of a* value. The water for extraction is preferably distilled water.

For the tea leaf powder of the present invention, the b* value based on the CIE1976 color space when the pH of the extracted liquid extracted under the conditions where 2 g of the tea leaf powder is immersed in 100 ml of water of 95°C and is allowed to stand for 10 minutes is adjusted to 5.5 or less with the foods indicating acidity and/or the acidifiers is preferably -50.0 or more, more preferably -45.0 or more, and further preferably -40.0 or more, -39.0 or more, -35.0 or more, or -30.0 or more. The upper limit of the b* value based on the CIE1976 color space of the extracted liquid extracted under the conditions where 2 g of the tea leaf powder is immersed in 100 ml of water of 95°C and is allowed to stand for 10 minutes is not particularly limited and is usually 20.0 or less. The water for extraction is preferably distilled water.

### <2. Method of producing tea leaf powder of the present invention>

The method of producing the tea leaf powder of the present invention includes:
Step (1): pulverizing a tea leaf having 0.05% by weight or more of anthocyanin content to obtain a pulverized tea leaf product; and
Step (2): selecting a pulverized tea leaf product having 300 µm or more of 50% particle diameter measured by a laser diffraction type particle size distribution measuring apparatus on volume basis, out of the pulverized tea leaf product to be provided as the tea leaf powder.

### [Step (1)]

The method for pulverizing the tea leaf to obtain the pulverized tea leaf product is not particularly limited. Examples of the method include a method of pulverizing the tea leaf by the pulverizer exemplified above.

The production method of the present invention may include a step of classifying the pulverized tea leaf product obtained in Step (1). The classification can be carried out by the known methods. For example, the classification can be carried out with a classifier such as a cyclone separator or a sieving machine.

The tea leaf having 0.05% by weight or more of anthocyanin content in Step (1) preferably has 10.0 to 50.0 of L* value based on the CIE1976 color space, -5.00 to 5.00 of a* value based on the CIE1976 color space, and 0 to 20.0 of b* value based on the CIE1976 color space.

The tea leaf having 0.05% by weight or more of anthocyanin content in Step (1) is preferably a tea leaf of *Camellia sinensis (L.) Kuntze sp Sunrouge* or a tea leaf of Cha Chuukanbohon Nou 6 and more preferably a tea leaf of *Camellia sinensis (L.) Kuntze sp Sunrouge.*

### [Step (2)]

The pulverized tea leaf product to be the target of the selection may be a pulverized tea leaf product after pulverization without separation or may be a classified pulverized tea leaf product.

A pulverized tea leaf product having 320 µm or more of 50% particle diameter measured by a laser diffraction type particle size distribution measuring apparatus on volume basis, is preferably selected out of the pulverized tea leaf product to be provided as the tea leaf powder. A pulverized tea leaf product having 340 µm or more of 50% particle diameter is more preferably selected to be provided as the tea leaf powder and a pulverized tea leaf product having 360 µm or more, 380 µm or more, 400 µm or more, 420 µm or more, 440 µm or more, 460 µm or more, 480 µm or more, 500 µm or more, 600 µm or more, 700 µm or more, 800 µm or more, 1000 µm or more, 1100 µm or more, or 1200 µm or more of 50% particle diameter is further preferably selected to be provided as the tea leaf powder.

Preferably, step (2) further includes selecting, out of the pulverized tea leaf product, a pulverized tea leaf product having 120 µm or more of 10% particle diameter measured by a laser diffraction type particle size distribution measuring apparatus on volume basis as the tea leaf powder. More preferably, a pulverized tea leaf product having 140 µm or more of 10% particle diameter is selected as the tea leaf powder. Further preferably, a pulverized tea leaf product having 160 µm or more, 180 µm or more, 200 µm or more, 220 µm or more, 240 µm or more, 260 µm or more, 280 µm or more, 300 µm or more, 320 µm or more, 340 µm or more, 360 µm or more, 380 µm or more, 400 µm or more, 500 µm or more, or 600 µm or more of 10% particle diameter is selected as the tea leaf powder.

Preferably, step (2) further includes selecting, out of the pulverized tea leaf product, a pulverized tea leaf product having 500 µm or more of 90% particle diameter measured by a laser diffraction type particle size distribution measuring apparatus on volume basis as the tea leaf powder. More preferably, a pulverized tea leaf product having 600 µm or more of 90% particle diameter is selected as the tea leaf powder. Further preferably, a pulverized tea leaf product having 700 µm or more, 800 µm or more, 900 µm or more, 1000 µm or more, 1200 µm or more, 1400 µm or more, 1600 µm or more, 1800 µm or more, or 2000 µm or more of 90% particle diameter is selected as the tea leaf powder.

Preferably, step (2) further includes selecting, out of the pulverized tea leaf product, a pulverized tea leaf product having 72.0 or less of L* value based on the CIE1976 color space of the extracted liquid extracted under the conditions where 2 g of the pulverized tea leaf product is immersed in 100 ml of water of 95°C and is allowed to stand for 10 minutes, as the tea leaf powder. More preferably, a pulverized tea leaf product having 71.0 or less of L* value is selected as the tea leaf powder. Further preferably, a pulverized tea leaf product having 70.0 or less, 69.0 or less, 68.0 or less, 66.0 or less, 64.0 or less, 62.0 or less, 60.0 or less, 55.0 or less, or 50.0 or less of L* value is selected as the tea leaf powder. The water for extraction is preferably distilled water.

Preferably, step (2) further includes selecting, out of the pulverized tea leaf product, a pulverized tea leaf product having 44.7 or more of a* value based on the CIE1976 color space of the extracted liquid extracted under the conditions where 2 g of the pulverized tea leaf product is immersed in 100 ml of water of 95°C and is allowed to stand for 10 minutes, as the tea leaf powder. More preferably, a pulverized tea leaf product having 45.0 or less of a* value is selected as the tea leaf powder. Further preferably, a pulverized tea leaf product having 46.0 or more, 47.0 or more, 48.0 or more, 49.0 or more, 50.0 or more, 51.0 or more, or 52.0 or more of a* value is selected as the tea leaf powder. The water for extraction is preferably distilled water.

Preferably, step (2) further includes selecting, out of the pulverized tea leaf product, a pulverized tea leaf product having -45.0 or more of b* value based on the CIE1976 color space of the extracted liquid extracted under the conditions where 2 g of the pulverized tea leaf product is immersed in 100 ml of water of 95°C and is allowed to stand for 10 minutes, as the tea leaf powder. More preferably, a pulverized tea leaf product having -44.0 or more of b* value is selected as the tea leaf powder. Further preferably, a pulverized tea leaf product having - 43.0 or more, -42.0 or more, -41.0 or more, -40.0 or more, -38.0 or more, -35.0 or more, -30.0 or more, -27.0 or more, or -26.0 or more of b* value is selected as the tea leaf powder. The water for extraction is preferably distilled water.

### [Step (3)]

The method for producing the tea leaf powder of the present invention may further include Step (3): packing the tea leaf powder to provide a tea bag. The examples of the package material and the shape of the tea bag are as previously described.

The tea leaf powder providing the liquid extracted from tea leaf having a favorable liquid color can be obtained by the method for producing the tea leaf powder of the present invention.

### <3. Method for producing liquid extracted from tea leaf>

A method for producing the liquid extracted from tea leaf of the present invention includes extracting the tea leaf powder or tea leaf powder produced by the method for producing the tea leaf powder with water.

The conditions of extracting the tea leaf powder with water are not particularly limited. Examples of the conditions include the extraction conditions of the tea leaf previously exemplified.

Type of water serving as the extraction medium is not particularly limited. Examples of the water include the types of water previously exemplified.

The conditions of the water extraction are preferably as follows:
The extraction temperature is preferably 0°C or more, more preferably 40°C or more, and further preferably 70°C or more. The upper limit of the extraction temperature is preferably 100°C or less, more preferably 98°C or less, and further preferably 95°C or less.

Therefore, the extraction temperature is preferably 0°C to 100°C, more preferably 40°C to 98°C and further preferably 70°C to 95°C.

The extraction time is preferably 10 seconds or more, more preferably 1 minute or more, and further preferably 3 minutes or more. The upper limit of the extraction time is preferably 48 hours or less, more preferably 60 minutes or less, and further preferably 10 minutes or less.

Therefore, the extraction time is preferably 10 seconds to 48 hours, more preferably 1 minute to 60 minutes, and further preferably 3 minutes to 10 minutes.

The weight of the tea leaf powder relative to 100 ml of the extraction medium is preferably 0.1 g/100 mL or more, more preferably 0.5 g/100 mL or more, and further preferably 1.0 g/100 mL or more. The upper limit of the weight of the tea leaf powder relative to 100 ml of the extraction medium is preferably 20 g/100 mL or less, more preferably 10 g/100 mL or less, and further preferably 5.0 g/100 mL or less.

Therefore, the weight of the tea leaf powder relative to 100 ml of the extraction medium is preferably 0.1 g/100 mL to 20 g/100 mL, more preferably 0.5 g/100 mL to 10 g/100 mL, and further preferably 1.0 g/100 mL to 5.0 g/100 mL,

A mixture prepared by adding optional components to the tea leaf powder having an anthocyanin content of 0.05% by weight may be extracted with water. The optional components are not particularly limited as long as the optional components do not inhibit the effect of the present invention. Examples of the optional components include tea leaves other than the tea leaf having an anthocyanin content of 0.05% by weight or more, other raw materials for beverage, sweeteners, acidifiers, preservatives, seasonings, pH adjusting agents, antioxidants, and aroma chemicals.

According to the method for producing the liquid extracted from tea leaf of the present invention, the liquid extracted from tea leaf having a favorable liquid color can be obtained. The liquid extracted from tea leaf can be provided as the tea beverage in a state where the solid content is contained or in a state where the solid content is removed by treatment such as filtration, centrifugal separation, and sieving. The liquid extracted from tea leaf may be provided as the tea beverage in a state where the other additives are added to the extracted liquid from tea leaf.

### <4. Method for selecting tea leaf powder for liquid extracted from tea leaf having a favorable liquid color of the present invention>

The method for selecting the tea leaf powder for the liquid extracted from tea leaf having a favorable liquid color of the present invention includes
Step (1): pulverizing a tea leaf having 0.05% by weight or more of anthocyanin content to obtain a pulverized tea leaf product; and
Step (2): selecting a pulverized tea leaf product having 300 µm or more of 50% particle diameter, the 50% particle diameter being measured by a laser diffraction type particle size distribution measuring apparatus on volume basis, out of the pulverized tea leaf product.

Step (1) is previously explained in <2. Method for producing tea leaf powder of the present invention>.

In Step (2), the pulverized tea leaf product to be the target of the selection may be a pulverized tea leaf product after pulverization without separation or may be a classified pulverized tea leaf product.

Preferably, step (2) further includes selecting, out of the pulverized tea leaf product, a pulverized tea leaf product having 320 µm or more of 50% particle diameter measured by a laser diffraction type particle size distribution measuring apparatus on volume basis. More preferably, a pulverized tea leaf product having 340 µm or more of 50% particle diameter is selected. Further preferably, a pulverized tea leaf product having 360 µm or more, 380 µm or more, 400 µm or more, 420 µm or more, 440 µm or more, 460 µm or more, 480 µm or more, 500 µm or more, 600 µm or more, 700 µm or more, 800 µm or more, 1000 µm or more, 1100 µm or more, or 1200 µm or more of 50% particle diameter is selected.

Preferably, step (2) further includes selecting, out of the pulverized tea leaf product, a pulverized tea leaf product having 120 µm or more of 10% particle diameter measured by a laser diffraction type particle size distribution measuring apparatus on volume basis. More preferably, a pulverized tea leaf product having 140 µm or more of 10% particle diameter is selected. Further preferably, a pulverized tea leaf product having 160 µm or more, 180 µm or more, 200 µm or more, 220 µm or more, 240 µm or more, 260 µm or more, 280 µm or more, 300 µm or more, 320 µm or more, 340 µm or more, 360 µm or more, 380 µm or more, 400 µm or more, 500 µm or more, or 600 µm or more of 10% particle diameter is selected.

Preferably, step (2) further includes selecting, out of the pulverized tea leaf product, a pulverized tea leaf product having 500 µm or more of 90% particle diameter measured by a laser diffraction type particle size distribution measuring apparatus on volume basis. More preferably, a pulverized tea leaf product having 600 µm or more of 90% particle diameter is selected. Further preferably, a pulverized tea leaf product having 700 µm or more, 800 µm or more, 900 µm or more, 1000 µm or more, 1200 µm or more, 1400 µm or more, 1600 µm or more, 1800 µm or more, or 2000 µm or more of 90% particle diameter is selected.

The tea leaf powder selected by the selection method of the present invention is suitable for providing the liquid extracted from tea leaf having a favorable liquid color.

### EXAMPLES

Hereinafter, the present invention will be specifically described with reference to Examples. The present invention, however, is not limited to these Examples.

### [Example 1]

### (1) Preparation of tea leaf powder

10 g of the tea leaf of green tea variety *Sunrouge* (manufactured by Tokunoshima Seicha Co., Ltd.), 0.2% of anthocyanin content) was pulverized with a pulverizer (MILLSER (registered trademark) IFM-700G, manufactured by Iwatani Corporation) for 15 seconds to obtain Pulverized Product 1. The CIE1976 (L*, a*, b*) color spaces of Pulverized Product 1 were measured with a compact color and whiteness meter (type NW-12, manufactured by NIPPON DENSHOKU INDUSTRIES CO., LTD.). As a result, Pulverized Product 1 had 35.5 of L* value, -2.46 of a* value, and 7.94 of b* value.

Pulverized Product 1 was sieved with a sieve having 1.00 mm of sieve opening (manufactured by AS ONE Corporation) to recover Pulverized Product 2, which passed through the sieve. Further, Pulverized Product 2 was sieved with a sieve having 500 µm of sieve opening (manufactured by AS ONE Corporation) to obtain Pulverized Product 3, which remained on the sieve having 500 µm of sieve opening, as Tea leaf powder (A-1).

### (2) Evaluation of tea leaf powder

The 10% particle diameter, 50% particle diameter, and 90% particle diameter of Tea leaf powder (A-1) were measured with a laser diffraction type particle size distribution measuring apparatus (MASTERSIZER 3000, manufactured by Malvern Instruments Ltd.).

2 g of Tea leaf powder (A-1) was packed in a commercially available bag for tea bag (Tokiwa no Ocha Pack M, manufactured by Tokiwa kougyou). The packed Tea leaf powder (A-1) was immersed into 100 ml of distilled water of 95°C and was allowed to stand for 10 minutes. Thereafter, the extracted water was centrifuged at 3,000 G for 10 minutes and the clear supernatant liquid was recovered to obtain the extracted liquid. The CIE1976 (L*, a*, b*) color space of the extracted liquid of which one hour had passed from the extraction was measured with a spectrophotometer (UV-3100PC, manufactured by SHIMADZU CORPORATION) without controlling pH.

The pH of the extracted liquid of which one hour had passed from the extraction was adjusted to 3.7 with citric acid and the CIE1976 (L*, a*, b*) color spaces of the extracted liquid after adjustment were measured with a spectrophotometer (UV-3100PC, manufactured by SHIMADZU CORPORATION).

The results are listed in Table 1.

### [Example 2]

Pulverized Product 1 in Example 1 was sieved with a sieve having 500 µm of sieve opening (manufactured by AS ONE Corporation) to recover Pulverized Product 4, which passed through the sieve. Further, Pulverized Product 4 was sieved with a sieve having 425 µm of sieve opening (manufactured by AS ONE Corporation) to obtain Pulverized Product 5, which remained on the sieve having 425 µm of sieve opening, as Tea leaf powder (A-2). Tea leaf powder (A-2) was evaluated in the same manner as the evaluation of the tea leaf powder in (2) of Example 1 except that Tea leaf powder (A-2) was used instead of Tea leaf powder (A-1). The results are listed in Table 1.

### [Example 3]

Pulverized Product 1 in Example 1 was sieved with a sieve having 425 µm of sieve opening (manufactured by AS ONE Corporation) to recover Pulverized Product 6, which passed through the sieve. Further, Pulverized Product 6 was sieved with a sieve having 355 µm of sieve opening (manufactured by AS ONE Corporation) to obtain Pulverized Product 7, which remained on the sieve having 355 µm of sieve opening, as Tea leaf powder (A-3). Tea leaf powder (A-3) was evaluated in the same manner as the evaluation of the tea leaf powder in (2) of Example 1 except that Tea leaf powder (A-3) was used instead of Tea leaf powder (A-1). The results are listed in Table 1.

### [Example 4]

Pulverized Product 1 in Example 1 was sieved with a sieve having 355 µm of sieve opening (manufactured by AS ONE Corporation) to recover Pulverized Product 8, which passed through the sieve. Further, Pulverized Product 8 was sieved with a sieve having 300 µm of sieve opening (manufactured by AS ONE Corporation) to obtain Pulverized Product 9, which remained on the sieve having 300 µm of sieve opening, as Tea leaf powder (A-4). Tea leaf powder (A-4) was evaluated in the same manner as the evaluation of the tea leaf powder in (2) of Example 1 except that Tea leaf powder (A-4) was used instead of Tea leaf powder (A-1). The results are listed in Table 1.

### [Comparative Example 1]

Pulverized Product 1 in Example 1 was sieved with a sieve having 300 µm of sieve opening (manufactured by AS ONE Corporation) to recover Pulverized Product 10, which passed through the sieve, as Tea leaf powder (B-1). Tea leaf powder (B-1) was evaluated in the same manner as the evaluation of the tea leaf powder in (2) of Example 1 except that Tea leaf powder (B-1) was used instead of Tea leaf powder (A-1). The results are listed in Table 1.

### [Table 1]

**Table 1**

| | | | Exam ple 1 | Exam ple 2 | Exam ple 3 | Exam ple 4 | Compar ative Exam ple 1 |
|---|---|---|---|---|---|---|---|
| Tea leaf powder | | | A-1 | A-2 | A-3 | A-4 | B-1 |
| Particle diameter of tea leaf powder^{(*)} | | 10% particle diameter (µm) | 647 | 591 | 386 | 306 | 112 |
| | | 50% particle diameter (µm) | 1230 | 1000 | 578 | 471 | 274 |
| | | 90% particle diameter (µm) | 2330 | 1890 | 854 | 700 | 490 |
| Liquid color adjusted) | Color differ ence (CIE1976) | L* | 47.17 | 48.29 | 53.41 | 67.21 | 72.80 |
| | | a* | 52.73 | 50.30 | 47.58 | 44.99 | 44.61 |
| | | b* | -26.57 | -27.35 | -38.79 | -40.10 | -45.10 |
| Liquid color (pH=3.7) | Color differ ence (CIE1976) | L* | 41.06 | 42.64 | 48.59 | 58.64 | 62.22 |
| | | a* | 83.10 | 82.55 | 82.51 | 79.62 | 78.83 |
| | | b* | -26.67 | -26.08 | -38.09 | -42.56 | -52.67 |

| | | | | | | | |
|---|---|---|---|---|---|---|---|
| (*) particle diameter on volume basis by a laser diffraction type particle size distribution measuring apparatus | | | | | | | |

As can be seen from the results listed in Table 1, the tea leaf powder of *Sunrouge* of Examples 1 to 4 have lower L* values and higher a* values as compared with the tea leaf powder of Sunrouge of Comparative Example 1, which has 300 µm of 50% particle diameter and thus provide strong and stronger redness liquid color not depending on the pH of the extracted liquid.

These results indicate that the tea leaf powder having 300 µm or more of 50% particle diameter and 0.05% by weight or more of anthocyanin content provides the extracted product from tea leaf having a favorable liquid color.

## Claims

1. A tea leaf powder having 300 µm or more of 50% particle diameter measured by a laser diffraction type particle size distribution measuring apparatus on volume basis, and 0.05% by weight or more of anthocyanin content.

2. The tea leaf powder according to claim 1, wherein the tea leaf powder has 10.0 to 50.0 of L* value based on the CIE1976 color space, -5.00 to 5.00 of a* value based on the CIE1976 color space, and 0 to 20.0 of b* value based on the CIE1976 color space.

3. The tea leaf powder according to claim 1 or 2, wherein the tea leaf powder is a tea leaf powder of *Camellia sinensis (L.) Kuntze sp Sunrouge.*

4. The tea leaf powder according to any one of claims 1 to 3, wherein the tea leaf powder has 120 µm or more of 10% particle diameter measured by a laser diffraction type particle size distribution measuring apparatus on volume basis.

5. The tea leaf powder according to any one of claims 1 to 4, wherein the tea leaf powder has 500 µm or more of 90% particle diameter measured by a laser diffraction type particle size distribution measuring apparatus on volume basis.

6. The tea leaf powder according to any one of claims 1 to 5, wherein the L* value based on the CIE1976 color space of an extracted liquid extracted under conditions where 2 g of the tea leaf powder is immersed in 100 ml of water of 95°C and is allowed to stand for 10 minutes is 72.0 or less.

7. The tea leaf powder according to any one of claims 1 to 6, wherein the a* value based on the CIE1976 color space of an extracted liquid extracted under conditions where 2 g of the tea leaf powder is immersed in 100 ml of water of 95°C and is allowed to stand for 10 minutes is 44.7 or more.

8. The tea leaf powder according to any one of claims 1 to 7, wherein the b* value based on the CIE1976 color space of an extracted liquid extracted under conditions where 2 g of the tea leaf powder is immersed in 100 ml of water of 95°C and is allowed to stand for 10 minutes is -45.0 or more.

9. The tea leaf powder according to any one of claims 1 to 8, wherein the tea leaf powder is used for a tea bag.

10. A tea bag comprising the tea leaf powder according to any one of claims 1 to 9.

11. A method of producing a tea leaf powder having 0.05% by weight or more of anthocyanin content, the method comprising:
Step (1): pulverizing a tea leaf having 0.05% by weight or more of anthocyanin content to obtain a pulverized tea leaf product; and
Step (2): selecting a pulverized tea leaf product having 300 µm or more of 50% particle diameter measured by a laser diffraction type particle size distribution measuring apparatus on volume basis, out of the pulverized tea leaf product to be provided as a tea leaf powder.

12. The method of producing a tea leaf powder according to claim 11, wherein Step (2) further comprises selecting a pulverized tea leaf product having 72.0 or less of L* value based on the CIE1976 color space of an extracted liquid extracted under conditions where 2 g of the pulverized tea leaf product is immersed in 100 ml of water of 95°C and is allowed to stand for 10 minutes, out of the pulverized tea leaf product to be provided as a tea leaf powder.

13. The method of producing a tea leaf powder according to claim 11 or 12, further comprising:
Step (3): packing the tea leaf powder to provide a tea bag.

14. A method of producing a liquid extracted from tea leaf comprising:
extracting the tea leaf powder according to any one of claims 1 to 9, the tea bag according to claim 10, or the tea leaf powder produced by the method according to any one of claims 11 to 13 with water.

15. A method of selecting a tea leaf powder usable for an extracted liquid of a tea leaf having a favorable liquid color, the method comprising:
Step (1): pulverizing a tea leaf having 0.05% by weight or more of anthocyanin content to obtain a pulverized tea leaf product; and
Step (2): selecting a pulverized tea leaf product having 300 µm or more of 50% particle diameter measured by a laser diffraction type particle size distribution measuring apparatus on volume basis, out of the pulverized tea leaf product.
